# EUROPEAN PATENT SPECIFICATION

(11) **EP 2 198 946 B1**
(45) Date of publication and mention of the grant of the patent: **26.06.2019**
(21) Application number: 08022287.0
(22) Date of filing: 22.12.2008
(51) Int. Cl.: B01D 53/02, B01D 53/04, B01D 53/047, B01J 20/12, B01J 20/18, B01J 20/28, B01J 20/30, B01J 20/32

(54) **COMPOSITE ADSORBENT BEAD, PROCESS FOR ITS PRODUCTION AND GAS SEPARATION PROCESS**
ABSORBIERENDE VERBUNDWERKSTOFFKÜGELCHEN, VERFAHREN ZU IHRER HERSTELLUNG UND GASTRENNUNGSVERFAHREN
BILLE ABSORBANTE COMPOSITE, SON PROCÉDÉ DE PRODUCTION ET PROCÉDÉ DE SÉPARATION DES GAZ

(43) Date of publication of application: 23.06.2010
(73) Proprietor: Glatt Systemtechnik GmbH, 01277 Dresden (DE)
(72) Inventor: Gerds, Almuth, 01187 Dresden (DE); Reger, Norman, 01277 Dresden (DE); Hungerbach, Wolfgang, 79379 Müllheim (DE); Van Lookeren, Constant Johan, 3722 BR Bilthoven (NL); Whitley, Roger Dean, Allentown, PA 18104 (US); Hufton, Jeffrey Raymond, Fogelsville, PA 18051 (US); Golden, Timothy Christopher, Allentown, PA 18104 (US)
(74) Representative: Pfenning, Meinig & Partner mbB

(56) References cited:
- EP-A- 1 080 771
- EP-A- 1 552 752
- WO-A-01/34295
- WO-A-99/28013
- FR-A- 2 794 993
- US-A- 5 707 516
- US-A1- 2005 005 869

## Description

The present invention refers to a composite adsorbent bead for the separation of at least one gas component from a gas mixture, based on a core-shell composite bead, a process of its production and a gas separation process using these composite adsorbent beads.

The application of adsorbents for gas separation and purification is of increasing importance for many chemical processes. In an adsorption gas separation process, a gas mixture is brought into contact with an adsorbent. One gas component is preferentially adsorbed. When the adsorbent is saturated, the pressure is reduced or the temperature is increased, such, that the preferentially adsorbed gas component is released producing a gas stream enriched in the preferentially adsorbed component.

The separation process can be improved by increasing the mass transfer rate and/or the adsorption capacity of the adsorbent particles. Other important factors determining the performance of the gas separation process are the physical strength and the density of the adsorbent particles. If the adsorbent particles crumble or the adsorbent density is too low the sorbent material may fluidise and leave the separation process with the gas flow.

The EP 1 080 771 A1 describes a gas separation process using composite adsorbent particles with an inner core comprising a non-porous and non-adsorbent material, e.g. sintered clays, such as kaolin, alumina or alumina oxide and at least one outer layer comprising an adsorbent material. Those composite beads can be used to improve the mass transfer in adsorption processes without reducing the particle size of the beads. Composite beads with a non-porous core have a relatively low active sorbent content in comparison to homogeneous adsorbent beads because they have an inactive core and contain at least as much inactive inorganic binder material as well known commercial homogeneous adsorbent beads. However the disadvantage of the lower adsorption capacity is offset by the improved mass transfer rate. Composite beads with non-porous cores suffer from the problem that the outer layer tends to crack during the sintering and activation process at the high temperatures of between 200°C - 600°C applied. Probably, this is due to the fact that the cores of non-porous material, e.g. of quartz sand, foamed glass or presintered inorganic agglomerates, have a different thermal expansion coefficient than the outer porous adsorbent layer. The crush strength of the active adsorbent material can be improved by adding inorganic binder material, however this will further reduce the adsorption capacity and consequently the performance of the composite adsorbent particle. For composite adsorbent beads, which already have a low adsorption capacity due to their inactive core, this disadvantage is an essential problem.

The FR 2 794 993 discloses similar composite adsorbent beads employed in gas separation which contain a core made of a material being ceramic, metals or clays surrounded by an adsorbent layer of a different composition.

Another problem of composite beads having solid impermeable non-porous cores relates to the difficulty to produce them in a small size. Composite beads with a D₅₀ < 1mm +/-15% are very difficult to produce due to the fact that solid impermeable cores with a small size and narrow particle size distribution, in the range of a D₅₀ < 0,7 mm +/-15%, are not readily available. Small size adsorbents have a higher mass transfer performance. The importance of mass transfer performance is well known. In pressure- or temperature swing adsorption gas separation processes the smaller size adsorbent with the higher mass transfer performance is placed at the product end of the adsorption column, whereas the larger sorbent particles are placed at the end, where the gas mixture enters the column in order to obtain optimal separation performance.

With composite adsorbent beads the same principles apply. Consequently smaller composite adsorbent beads, with the same core and bead dimensions, will have a higher mass transfer rate.

It is therefore important to be able to produce the composite adsorbent beads in a range of different sizes. Another important aspect is the bulk density of the adsorbent particles, since particles with a low bulk density may start to fluidise and have a negative effect on the separation performance.

It was therefore an aim of the present invention to overcome the disadvantages of the prior art and to provide a composite adsorbent bead with an increased mass transfer performance, having a sufficient high specific crush-strength as well as a lower tendency to crack during the manufacturing or gas separation process, which could be provided in a wide range of particle sizes.

This technical problem is solved by the composite adsorbent bead with the features of claim 1, the gas separation process with the features of claim 16 and the process for its production with the features of claim 18.

The present invention is directed to a composite adsorbent bead for the separation of at least one gas component from a gas mixture. The adsorbent has at least one core comprising at least one inorganic material being porous and non-adsorbent and at least one layer comprising a porous and adsorbent material, which is coated on the surface of the core.

It was surprisingly found that the mass transfer performance of the inventive beads is between 2 to 4 times higher, than well known comparable homogeneous adsorbents as is shown in table 1 and that the composite adsorbent beads following the invention can be applied in a wide range of sizes in industrial adsorption columns without being crushed to deliver their surprisingly improved performance .

Moreover, it was surprising that the composite adsorbent bead according to the present invention can be provided, wherein the outer layer comprises less than 20% wt/wt of at least one inorganic binder material and still have a specific crush strength of more than 1 N/mm². A specific crush strength of more than 1 N/mm² is essential for a reliable industrial application. For the purpose of this document the specific crush strength is the crush strength according to the ASTM D-4179 method divided by the cross section of the spherical composite adsorbent bead.

In a preferred embodiment, the composite adsorbent bead has a bulk density from 500 to 2000 kg/m³. The bulk density of a composite adsorbent bead is defined as the weight of adsorbent contained in a given volume consisting of a collection of beads having the same composition and the same diameter. The bulk density is preferably higher than the density of the at least one layer comprising the adsorbent material. For the purpose of this document the bulk density is measured as the density according to ASTM D6683.

It is further preferred that the at least one core is substantially spherical and it is particularly preferred that the at least one core has a sphericity in the range of 0,7 to 1. Sphericity of an adsorbent particle is a shape factor, which gives the ratio of the surface area of a sphere, with the same volume as the given adsorbent particle to the surface area of the particle. It has been found that solid non-porous cores having a sphericity of less than 0,7 have an inferior crush strength or have to be coated with a higher content of inorganic binders, such as sodium-silicate, polysiloxane, to obtain composite beads with a sufficient crush strength. Polysiloxane is considered to be an inorganic binder for the purpose of this document. After the activation heat treatment only the inorganic component of the polysiloxane is considered to be the inorganic binder. It was found, that with cores of a low sphericity it is difficult to reach a high bulk density.

However, inorganic binders reduce the adsorption capacity of the composite adsorbent bead.

It is preferred that the at least one core comprises 50 to 100 wt-% of agglomerated clay particles, in particular attapulgite or kaolin clay. Composite adsorbent beads having a core out of these materials show a particular good crush strength and bulk density. The best results could be found for porous cores comprising agglomerated clay particles with a diameter in the range of 0,01 to 5 µm.

In a preferred embodiment, the at least one core is formed of graphite or an metal, preferably selected from the group consisting of Mg, Fe, Ni, Co, Cu, Zn, Al, Sn, Pb and its alloys.

The at least one core has a preferred heat conductivity in the range of 1 to 450 W/mC.

The at least one adsorbent material is preferably selected from the group consisting of at least activated alumina, carbon molecular sieves and zeolites, preferably ZSM,X, A, or Y type zeolites and even more preferably of low silica X type and those zeolites mentioned in EP 1080771 A1 (p. 7, [0043] - p. 9, [0049]).

It is further preferred that the at least one layer comprises less than 20% wt, more preferably 2 to 20 wt% of at least one inorganic binder material, preferably selected from the group consisting of silica, clay, aluminium oxide, aluminiumphosphate, polysiloxane or mixtures thereof. In comparison to homogeneous adsorbent beads, all composite adsorbent beads show a reduced adsorption capacity per unit weight, since the inert core of non-adsorbent material does not have any adsorption capacity. It is therefore important that the at least one outer layer comprising the porous and adsorbent material comprises only a minimum of an inert and non-adsorbent binder material, such that the composite adsorbent bead still has a sufficiently high crush strength, but has only a limited reduction in adsorption capacity. The specific crush strength should be at least 1N/mm² otherwise, the composite adsorbent beads will crumble if they are applied in industrial adsorption beds.

It is further preferred that the composite adsorbent beads following the invention have a diameter of 0,1 to 5 mm, preferably 0,25 to 3 mm. The best results could be achieved with an outer diameter in the range of 0,25 mm to 1,4 mm.

It could be observed that an improved adsorption performance can be achieved with composite adsorbent beads having a ratio of the core diameter to the composite bead diameter in the range of 0,5 to 0,98, preferably in the range of 0,6 to 0,8.

It is preferred that the composite adsorbent beads have an overall porosity in the range of 10% to 50%, preferably in the range of 20% to 40%.

The composite adsorbent beads according to the present invention have a preferred specific surface in the range of 350 to 800 m²g⁻¹, preferably in the range of 600 to 800 m²g⁻¹ as measured by the BET method.

It is further preferred that the interior of the composite adsorbent beads is formed out of multiple cores which are all together coated by the outer layer. The typical number of cores which can be implemented in the beads is in the range of 3 to 100.

According to the present invention, also a gas separation process for the separation of at least one gas component from a gas mixture is provided. This process comprises the feeding of a gas mixture comprising at least two gas components into an adsorption vessel comprising a bed of the composite adsorbent beads as defined above and subjecting the gas mixture to conditions which allow the adsorption of at least one gas component which has to be separated from the gas mixture.

Furthermore, a porous and non-adsorbent core is provided which comprises agglomerated clay particles with a particle size in the range of 0,01 µm to 5 µm and an organic and/or inorganic binder. The particle size is preferably in the range of 0,05 µm to 2 µm. The clay material is preferably selected from kaolin, attapulgite, bentonite. The organic binder material is preferably selected from the group of water soluble polymers consisting of polyvinylalcohol, modified starch or modified cellulose.

### Example 1

Clay powder obtained from Fa. Georg and Schneider type Masse Nr. 242 having a mean particle size of between 0,05 µm and 2 µm was suspended in water at room temperature and mixed with an ultra thorax into a suspension of 38 wt%. 5 g polyvinyl alcohol (Mowiol 4/88)/100 g clay powder was added and 10 g glycerin/l00 g clay powder.

This suspension was sprayed into a Glatt Rotor coater type SR unit to produce dry clay cores which were classified with a sieve to obtain fractions with a mean diameter of 2500 µm, 1400 µm, 350 µm, 200 µm and 150 µm with a standard deviation of +/- 10%.

Subsequently, the core fractions as indicated in the table below were loaded into a Glatt SR rotor coater and were sprayed with a zeolite suspension comprising 2wt% inorganic binder (kaolin powder nr 86 with a particle size between 0,35um - 0,4 um obtained from Burgess Pigment) and 6,5% PVA (Mowiol 4/88) per kg of zeolite and 2 wt% of glycerine per kg zeolite. The coating was continued until the target average sorbent particle size was reached. The zeolite powder type 5A was obtained from UOP and the zeolite powder type LiLSX was obtained from Chemie Werk Bad Köstriz.

The dimensions of the cores of the various batches were as indicated in the Table 1 below and the coating was continued until the outer diameter of the composite bead was about 10% more than indicated for the final products in the Table 1, to compensate for shrinking of the porous layer during the heat treatment.

The Crush strength was measured according to the ASTM method ASTM D4179. Subsequently, the composite beads were subjected to a heat treatment in line with the following heating schedule:
a. Increasing the temperature from room temperature to 220 °C at a rate of 2 °C/min and a holding time of 1 hour at 220 °C.
b. Increasing the temperature further at a rate of 2 °C/min to 280 °C and a holding time of 1 hour at 280 °C.
c. Increasing the temperature to 400 °C at a rate of 2 °C/min and a holding time of 2 hours at 400 °C in a vacuum oven and 4 hrs at 400C.The dry air flow was kept at a rate of 4 times the volume of the composite adsorbent beads/ minute.

Subsequently the composite adsorbent beads were activated in a vacuum oven, where the temperature was increased at a rate of 2 C/min and kept for 4 hrs at 400C.

The samples reference number 317-13;321-17;321-19;321-20;321-21 were produced in this way. The specific crush strength of all samples was more than 1 N/mm2. The results in table 1 show, that the composite adsorbent beads following the invention have a considerable improved mass transfer performance. The best performing composite adsorbent bead following the invention, 321-21, has a mass transfer performance of 4 times the homogeneous bead with the same 5A zeolite adsorbent due to the presence of an inert core and its smaller size. This shows the importance to be able to provide composite adsorbent beads, also in a smaller size with a sufficiently high crush strength. Following the same process, but adding 10% weight polysiloxane to the 5A Zeolite suspension gave a further improved crush strength of 3,6 N/m² for a composite adsorbent bead with a diameter of 0,5 mm and a diameter ratio of 0,6, resulting in a bulk density of 1100 Kg/m³ and a mass transfer coefficient Of 2,11 s⁻¹.

Table 1 includes N₂ capacity of each adsorbent as well as the N₂ mass transfer coefficient. The N₂ capacity at 40°C and 101 kPa N₂ was determined by weight uptake in a thermogravimetric analyzer. The mass transfer properties of the adsorbents were evaluated using a standard volumetric adsorption apparatus. The experiment consisted of exposing an adsorbent sample at 30°C to a measured amount of N₂ at 760 Torr (1 bar). The change in pressure was then followed as a function of time. A similar pressure profile using an inert gas (He) is subtracted from the pressure-time data to obtain a plot of the amount of N₂ adsorbed as a function of time. From the initial slope of the uptake curve, a N₂ diffusion parameter in units of inverse time (sec⁻¹) can be obtained.

The theory behind the derivation of the diffusion parameter is given in Chapter 6 of Ruthven (Ruthven, D. M., Principles of Adsorption and Adsorption Processes, John Wiley & Sons, New York (1984).

**Table 1**

| **Sample nr.** | **317-13** | **321-17** | **321-19** | **321-20** | **321-21** | **Homogeneous bead** | **Homogeneous bead** |
|---|---|---|---|---|---|---|---|
| Core-diameter (mm) | 1,4 | 1,4 | 1,4 | 1,4 | 0,2 mm | n.a. | n.a. |
| Bead-diameter (mm) | 2,1 | 2,1 | 2,0 | 2,0 | 0,4 | 2,0 | 2,0 |
| Diameter ratio | 0,7 | 0,7 | 0,7 | 0,7 | 0,5 | n.a. | n.a. |
| Mass | 1,07 | 0,88 | 1,05 | 0,76 | 3,2 | 0,4 | 0,8 |
| transfer Coefficient (sec⁻¹) | 270% | 220% | 260% | 190% | 200% | 100% | 200% |
| Adsorption capacity (101 kPa N₂ at 40°C) | 0.18 mmole/g | 0.24 mmole/g | 0.32 mmole/g | 0.28 mmole/g | 0.21 mmole/g | 0.84 mmole/g | 0,48 mmole/g |
| Core | Clay | Clay | Clay | Clay | Clay | n.a. | n.a. |
| material | porous | porous | porous | porous | porous | | |
| Zeolite Shell material | 5A | LiLSX | LiLSX | LiLSX | 5A | LiLSX | 5A |
| Bulk density of composite beads ( kg/M³ ) | 1042 | 966 | -- | -- | 756 | -- | -- |
| Bulk density of the cores (kg/M³) | 1312 | 1312 | -- | -- | 978 | -- | -- |
| Crush strength (Lbf)/(N) | 3,1/14 | 1,7/8 | 1,9/8,5 | 3,0/13 | 0,03/0,15 | 5/22 | 2,5/11 |
| Spec. crush Strength (N/mm²) | 4,5 | 2,5 | 2,7 | 4,1 | 1,44 | 7 | 3,5 |

It is important that the cores and the sorbent material are subjected to one and the same heat treatment, such that the core still comprises the organic binder material before the composite bead is subjected to the heat treatment, to obtain a sufficiently good crush strength.

### Example 2

Cores of quartz sand coated in the same Glatt SR rotor coater having an outer layer of Zeolite and inorganic binder in a ratio 80/20% wt were compared with samples of composite adsorbent beads according to the invention.

All samples had a sufficiently high crush strength of more than 1 N/mm².

The composite adsorbent beads following the invention were coated according to example 1. However the inorganic binder content in the outer sorption layer was kept at 2% wt/wt, which was found to be sufficient to obtain a sufficiently high crush strength of more than 1 N/mm². The bulk density of the composite beads with a non-porous core of quartz sand having the same dimensions was lower, than the bulk density of the adsorbent beads of the invention. This is surprising, because the bulk density of the non-porous core is higher, than the bulk density of the porous core.

This surprising effect may be explained by the fact, that the non-porous quartz sand core has a lower sphericity and the outer adsorbent layer consequently has only a very low density between the edges of the core. The results in Table 2 therefore show clearly, that the adsorption capacity per volume of beads for comparable composite adsorbent beads following the invention is much higher than those for composite beads having a non-porous core. Consequently the much higher adsorption capacity is not only due to the lower content of inactive binder in the adsorption layer, but also the result of the higher bulk density. The best performance is of course that of the sample (08-07) with a bead diameter of 0,48 mm, which not only showed a high adsorption capacity, but also a best mass transfer performance of more than 3 times higher, than the homogeneous bead. The adsorption capacity in table 2 is the calculated capacity and is different from the measured equilibrium capacity in the rest of this document.

**Table 2**

| **Zeolite Adsorbent bead (ref. no.)** | **Homogeneous** | **Impermeable Quartz Sand Core** | **Porous Clay Core (08-03)** | **Porous Clay Core (08-07)** |
|---|---|---|---|---|
| Inorganic Binder Content in adsorbent | 17% wt | 20% wt | 2% wt | 2% |
| Diameter/core Ratio; Ri/Ro | n.a. | 0,68 | 0,68 | 0,62 |
| Bead diameter D_{50;} mm | 2 | 2 | 2 | 0,48 |
| Bulk Density; Kg/m³ | 700 | 976 | 1042 | 756 |
| Zeolite Content; Kg/Kg | 0,83 | 0,44 | 0,53 | 0,60 |
| Zeolite Content; Kg/m³ | 581 | 429 | 549 | 456 |
| Adsorption *) | 125 | 66 | 78 | 92 |
| Capacity/Kg | (100%) | (53%) | (62%) | (74%) |

### Example 3

Hydrogen PSA pilot unit testing has been done to compare the performance of 5A zeolite composite adsorbent beads following the invention prepared according to the method defined in example 1(0.4 mm with 0.2 mm of core) and a homogeneous 5A zeolite adsorbent bead(0.35 mm). A cycle of 4/1/1 (4 bed system with 1 bed on feed and 1 equalization, US 3,430,418) was used to treat a 135 psig (10.2 bar absolute) feed gas consisting of 73% H₂, 18% CO₂, 5% CH₄, 3% CO and 1% N₂. Each bed had an inside diameter of 0.87 inches (2.2 cm), a length of 5 feet 152.4 cm) and was packed with 50 vol% 5A and 50 vol% 0.75 mm carbon (Kureha BAC). The H₂ product purity was controlled at 1 ppm CO. The two 5A samples were compared in terms of H₂ recovery (H₂ produced per cycle/H₂ in feed stream per cycle) and bed size factor (BSF). The BSF units are m³ of total adsorbent required to produce 1000 Nm³/h of H₂. Clearly, an adsorbent that yields higher H₂ recovery (higher efficiency) and a smaller bed size factor (smaller bed to produce a given volume of H₂) is preferred. Results of the testing show that at a 10 second feed (adsorb) time, the homogenous adsorbent showed a H₂ recovery of 68.9% and a BSF of 0.80. The corresponding results with the 5A composite adsorbent bead following the invention show a H₂ recovery of 70.9% and a BSF of 0.74. These results show that the porous composite adsorbent adsorbent bead following the invention exhibits higher recovery and lower BSF than a similarly sized homogenous adsorbent.

### Example 4

Example 3 shows the utility of the composite adsorbent bead following the invention in PSA application. The importance of mass transfer performance in PSA applications is well documented (e.g. US 4,964,888). US 4,964,888 shows that the high mass transfer adsorbent needs to be placed only on the product end of the bed where the impurity mass transfer zone is located. US 4,964,888 solves the problem of improving mass transfer rate in the mass transfer zone by using smaller adsorbent particles. The issue with using small particles is 1) they increase the pressure drop in the system which is undesirable and 2) they can fluidize under the operational flow velocities in the PSA process. The composite adsorbent bead following the invention eliminates these issues because the particle size is larger and the bulk density is higher than the materials proposed in US 4,964,888. However, mass transfer is also important in TSA (temperature swing adsorption) processes as well, especially TSA systems where large adsorbent particles (2mm and greater) are used since the percentage of the bed which contains the mass transfer zone is greater the larger the adsorbent particles.

To test the utility of the composite adsorbent bead following the invention in TSA application N₂ breakthrough curves in He carrier gas were measured. In these tests, a 0.87 inch (2.21 cm) diameter and 6 foot (182.9 cm) long column was used. The feed gas was 500 ppm N₂ in He with the following feed conditions: 350 psig (25.0 MPa), 25°C and a flow rate of 4718 Nm³/m² cross sectional area/hr. The adsorbents tested included 2 mm homogenous 5A (UOP 5A), a 5A composite bead following the invention (sample 317-13) and a bed with homogeneous 5A on the feed end of the bed (77%, 140.8 cm) and porous core adsorbent on the product end of the bed (23%, 42.1 cm). The results of the breakthrough testing are shown in the following table 3.

**Table 3**

| **Adsorbent** | **(mmole/cc of bed) Equilibrium capacity** | **(cm) Length of Unused Bed** | **(sec) Time to 1 ppm N₂ breakthrough** | **(sec) Time to 250 ppm N₂ breakthrough** | **(mmole/cc of bed) Dynamic capacity** |
|---|---|---|---|---|---|
| UOP 5A | 0.0133 | 63.5 | 576 | 882 | 0.0087 |
| Inventive composite bead | 0.0059 | 40.8 | 300 | 386 | 0.0046 |
| 77% 5A/23% Invenitve Composite bead | 0.0116 | 41.5 | 606 | 784 | 0.0090 |

The equilibrium capacity is calculated by the time to the midpoint of N₂ breakthrough, the length of unused bed (LUB) is calculated by the expression LUB = L[1-(tᵢ/tₘ)], where L is the length of the bed, tᵢ is the time to 1 ppm breakthrough and tₘ is the time to 250 ppm breakthrough. The dynamic capacity is calculated by the time to initial N₂ breakthrough (1 ppm). The results in the table show that 1) the homogeneous 5A has a higher equilibrium and dynamic capacity than the porous core material, but the porous core material has a shorter LUB (which is one half of the mass transfer zone length). When a split bed of homogenous 5A and porous core 5A are used, the dynamic capacity is the greatest. This means a split bed of homogeneous 5A (for high equilibrium capacity) and 5A composite adsorbent bead following the invention (for shorter mass transfer zone length) can increase the dynamic capacity of a TSA system.

## Claims

1. Composite adsorbent bead for the separation of at least one gas component from a gas mixture, wherein the adsorbent has at least one core comprising at least one inorganic material being porous and non-adsorbent and, on the surface of the core, at least one layer comprising an porous and adsorbent material,
wherein the core comprises in the range of 50 to 100 wt% agglomerated clay particles having a diameter of 0.01 to 5 µm.

2. Composite adsorbent bead of claim 1,
wherein the composite adsorbent bead has a bulk density in the range of 560 to 2000 kg/m³.

3. Composite adsorbent bead of any of the preceding claims,
wherein the core is spherical, preferably with a sphericity in the range of 0.7 to 1.

4. Composite adsorbent bead of any of the preceding claims,
wherein the composite adsorbent bead has a specific crush strength in the range of 1 to 7 N/mm².

5. Composite adsorbent bead of any of the preceding claims,
wherein the agglomerated clay particles are selected from the group consisting of kaolin, attapulgite and bentonite.

6. Composite adsorbent bead of any of the preceding claims,
wherein the at least one core comprises graphite or a metal, preferably selected from the group consisting of Mg, Fe, Ni, Cu, Zn, Al, Sn, Zn, Al, Sn, Pb and its alloys.

7. Composite adsorbent bead of claim 6,
wherein the at least one core has a heat conductivity in the range of 1 to 450 W/mC.

8. Composite adsorbent bead of any of the preceding claims,
wherein the at least one adsorbent material is selected from the group consisting of zeolites, preferably ZSM, X,Y, or A type zeolites, even more preferably low silica X.

9. Composite adsorbent bead of any of the preceding claims,
wherein the at least one layer on the surface of the core comprises 2 to 20 wt% of the at least one inorganic binder material, preferably selected from the group consisting of silica, clay, aluminaoxide, aluminiumphosphate and polysiloxane.

10. Composite adsorbent bead of any of the preceding claims,
wherein the ratio of the core diameter to the composite bead diameter is in the range of 0.5 to 0.98, preferably in the range of 0.6 to 0.8.

11. Composite adsorbent bead of any of the preceding claims,
wherein the composite adsorbent bead has a overall porosity in the range of 10% to 50%, preferably in the range of 20% to 40%.

12. Composite adsorbent bead of any of the preceding claims,
wherein the composite adsorbent bead has a specific surface in the range of 350 to 800 m²g⁻¹, preferably in the range of 600 to 800 m²g⁻¹.

13. Composite adsorbent bead of any of the preceding claims,
wherein the composite adsorbent bead comprises at least 3 cores.

14. Gas separation process for the separation of at least one gas component from a gas mixture comprising feeding a gas mixture comprising at least two gas components into an adsorption vessel comprising a bed of the composite adsorbent beads of any of the preceding claims and subjecting the gas mixture to conditions which allow the adsorption of at least one gas component which has to be separated from the gas mixture.

15. Process for the production of a composite adsorbent bead according to claim 1-13, comprising:
a) producing a dried porous non-adsorbent core comprising in the range of 50 to 100 wt.-% agglomerated clay particles with a diameter in the range of 0.01 µm to 5 µm, and an organic binders,
b) applying a layer comprising adsorbent material,
c) at least one heating step, whereby organic binder material is removed.

16. Process according to claim 15, wherein the organic binder is selected from the group consisting of water soluble polymers consisting of polyvinylalcohol, modified starch or modified cellulose.

17. Process according to claim 16, wherein the water soluble polymer is polyvinylalcohol and the organic binder further comprises glycerine.

## Patentansprüche

1. Adsorptionsmittel-Verbundkügelchen zur Abtrennung von mindestens einer Gaskomponente aus einem Gasgemisch, wobei das Adsorptionsmittel mindestens einen Kern, der mindestens ein organisches Material, das porös und nichtadsorbierend ist, und auf der Oberfläche des Kerns mindestens eine Schicht, die ein poröses und adsorbierendes Material umfasst, aufweist,
wobei der Kern im Bereich von 50 bis 100 Gew.-% agglomerierte Tonteilchen mit einem Durchmesser von 0,01 bis 5 µm umfasst.

2. Adsorptionsmittel-Verbundkügelchen nach Anspruch 1,
wobei die Adsorptionsmittel-Verbundkügelchen eine Schüttdichte im Bereich von 560 bis 2000 kg/m³ aufweist.

3. Adsorptionsmittel-Verbundkügelchen nach einem der vorhergehenden Ansprüche,
wobei der Kern sphärisch ist, vorzugsweise mit einer Sphärizität im Bereich von 0,7 bis 1.

4. Adsorptionsmittel-Verbundkügelchen nach einem der vorhergehenden Ansprüche,
wobei die Adsorptionsmittel-Verbundkügelchen eine spezifische Druckfestigkeit im Bereich von 1 bis 7 N/mm² aufweist.

5. Adsorptionsmittel-Verbundkügelchen nach einem der vorhergehenden Ansprüche,
wobei die agglomerierten Tonteilchen aus der Gruppe bestehend aus Kaolin, Attapulgit und Bentonit ausgewählt sind.

6. Adsorptionsmittel-Verbundkügelchen nach einem der vorhergehenden Ansprüche,
wobei der mindestens eine Kern Graphit oder ein Metall, vorzugsweise aus der Gruppe bestehend aus Mg, Fe, Ni, Cu, Zn, Al, Sn, Zn, Al, Sn, Pb und Legierungen davon, umfasst.

7. Adsorptionsmittel-Verbundkügelchen nach Anspruch 6,
wobei der mindestens eine Kern eine Wärmleitfähigkeit im Bereich von 1 bis 450 W/mC aufweist.

8. Adsorptionsmittel-Verbundkügelchen nach einem der vorhergehenden Ansprüche,
wobei das mindestens eine Adsorptionsmittel-Material aus der Gruppe bestehend aus Zeolithen, vorzugsweise Zeolithen vom ZSM-, X-, Y- oder A-Typ, noch weiter bevorzugt siliciumarmem X, ausgewählt ist.

9. Adsorptionsmittel-Verbundkügelchen nach einem der vorhergehenden Ansprüche,
wobei die mindestens eine Schicht auf der Oberfläche des Kerns 2 bis 20 Gew.-% des mindestens einen anorganischen Bindemittels, das vorzugsweise aus der Gruppe bestehend aus Siliciumdioxid, Ton, Aluminiumoxid, Aluminiumphosphat und Polysiloxan ausgewählt ist, umfasst.

10. Adsorptionsmittel-Verbundkügelchen nach einem der vorhergehenden Ansprüche,
wobei das Verhältnis von Kerndurchmesser zu Verbundkügelchendurchmesser im Bereich von 0,5 bis 0,98, vorzugsweise im Bereich von 0,6 bis 0,8, liegt.

11. Adsorptionsmittel-Verbundkügelchen nach einem der vorhergehenden Ansprüche,
wobei die Adsorptionsmittel-Verbundkügelchen eine Gesamtporosität im Bereich von 10% bis 50%, vorzugsweise im Bereich von 20% bis 40%, aufweist.

12. Adsorptionsmittel-Verbundkügelchen nach einem der vorhergehenden Ansprüche,
wobei die Adsorptionsmittel-Verbundkügelchen eine spezifische Oberfläche im Bereich von 350 bis 800 m²g⁻¹, vorzugsweise im Bereich von 600 bis 800 m²/g⁻¹, aufweist.

13. Adsorptionsmittel-Verbundkügelchen nach einem der vorhergehenden Ansprüche,
wobei die Adsorptionsmittel-Verbundkügelchen mindestens 3 Kerne umfasst.

14. Gastrennverfahren zur Abtrennung mindestens einer Gaskomponente aus einem Gasgemisch, bei dem man ein Gasgemisch, das mindestens zwei Gaskomponenten umfasst, in einen Adsorptionsbehälter, der eine Schüttung der Adsorptionsmittel-Verbundkügelchenn nach einem der vorhergehenden Ansprüche umfasst, einleitet und das Gasgemisch Bedingungen unterwirft, die die Adsorption mindestens einer aus dem Gasgemisch abzutrennenden Gaskomponente erlauben.

15. Verfahren zur Herstellung einer Adsorptionsmittel-Verbundkügelchen nach Anspruch 1-13, umfassend:
a) Herstellen eines getrockneten nichtadsorbierenden Kerns, der im Bereich von 50 bis 100 Gew.-% agglomerierte Tonteilchen mit einem Durchmesser im Bereich von 0,01 µm bis 5 µm umfasst, und eines organischen Bindemittels,
b) Aufbringen einer Schicht, die adsorbierendes Material umfasst,
c) mindestens einen Erhitzungsschritt, wodurch organisches Bindemittel entfernt wird.

16. Verfahren nach Anspruch 15, bei dem das organische Bindemittel aus der Gruppe bestehend aus wasserunlöslichen Polymeren, die aus Polyvinylalkohol, modifizierter Stärke oder modifizierter Cellulose bestehen, ausgewählt wird.

17. Verfahren nach Anspruch 16, bei dem es sich bei dem wasserlöslichen Polymer um Polyvinylchlorid handelt und das organische Bindemittel ferner Glycerin umfasst.

## Revendications

1. Bille d'adsorbant composite pour la séparation d'au moins un composant gazeux dans un mélange gazeux, dans laquelle l'adsorbant a au moins un coeur comprenant au moins un matériau inorganique qui est poreux et non adsorbant et, sur la surface du coeur, au moins une couche comprenant un matériau poreux et adsorbant,
dans laquelle le coeur comprend 50 à 100 % en poids de particules d'argile agglomérées ayant un diamètre de 0,01 à 5 µm.

2. Bille d'adsorbant composite selon la revendication 1,
laquelle bille d'adsorbant composite a une masse volumique apparente située dans la plage allant de 560 à 2000 kg/m³.

3. Bille d'adsorbant composite selon l'une quelconque des revendications précédentes,
dans laquelle le coeur est sphérique, de préférence avec une sphéricité située dans la plage allant de 0,7 à 1.

4. Bille d'adsorbant composite selon l'une quelconque des revendications précédentes,
laquelle bille d'adsorbant composite a une résistance à la désagrégation spécifique située dans la plage allant de 1 à 7 N/mm².

5. Bille d'adsorbant composite selon l'une quelconque des revendications précédentes,
dans laquelle les particules d'argile agglomérées sont choisies dans le groupe constitué par le kaolin, l'attapulgite et la bentonite.

6. Bille d'adsorbant composite selon l'une quelconque des revendications précédentes,
dans laquelle l'au moins un coeur comprend du graphite ou un métal, de préférence choisi dans le groupe constitué par Mg, Fe, Ni, Cu, Zn, Al, Sn, Zn, Al, Sn, Pb et ses alliages.

7. Bille d'adsorbant composite selon la revendication 6,
dans laquelle l'au moins un coeur a une conductivité thermique située dans la plage allant de 1 à 450 W/mC.

8. Bille d'adsorbant composite selon l'une quelconque des revendications précédentes,
dans laquelle l'au moins un matériau adsorbant est choisi dans le groupe constitué par les zéolites, de préférence les zéolites ZSM, X, Y ou de type A, mieux encore la X à faible teneur en silice.

9. Bille d'adsorbant composite selon l'une quelconque des revendications précédentes,
dans laquelle l'au moins une couche sur la surface du coeur comprend 2 à 20 % en poids de l'au moins un matériau liant inorganique, de préférence choisi dans le groupe constitué par la silice, l'argile, l'oxyde d'alumine, le phosphate d'aluminium et le polysiloxane.

10. Bille d'adsorbant composite selon l'une quelconque des revendications précédentes,
dans laquelle le rapport du diamètre du coeur au diamètre de la bille composite est situé dans la plage allant de 0,5 à 0,98, de préférence dans la plage allant de 0,6 à 0,8.

11. Bille d'adsorbant composite selon l'une quelconque des revendications précédentes,
laquelle bille d'adsorbant composite a une porosité globale située dans la plage allant de 10 % à 50 %, de préférence dans la plage allant de 20 % à 40 %.

12. Bille d'adsorbant composite selon l'une quelconque des revendications précédentes,
laquelle bille d'adsorbant composite a une surface spécifique située dans la plage allant de 350 à 800 m²/g, de préférence dans la plage allant de 600 à 800 m²/g.

13. Bille d'adsorbant composite selon l'une quelconque des revendications précédentes,
laquelle bille d'adsorbant composite comprend au moins 3 coeurs.

14. Procédé de séparation de gaz pour la séparation d'au moins un composant gazeux dans un mélange gazeux, comprenant l'introduction d'un mélange gazeux comprenant au moins deux composants gazeux dans un récipient d'adsorption comprenant un lit des billes d'adsorbant composites selon l'une quelconque des revendications précédentes, et la soumission du mélange gazeux à des conditions qui permettent l'adsorption d'au moins un composant gazeux qui doit être séparé du mélange gazeux.

15. Procédé pour la production d'une bille d'adsorbant composite selon les revendications 1 à 13, comprenant :
a) la production d'un coeur non adsorbant poreux séché comprenant de 50 à 100 % en poids de particules d'argile agglomérées ayant un diamètre situé dans la plage allant de 0,01 µm à 5 µm, et des liants organiques,
b) l'application d'une couche comprenant un matériau adsorbant,
c) au moins une étape de chauffage, au moyen de laquelle le matériau liant organique est éliminé.

16. Procédé selon la revendication 15, dans lequel le liant organique est choisi dans le groupe constitué par les polymères solubles dans l'eau consistant en le poly(alcool vinylique), l'amidon modifié, et la cellulose modifiée.

17. Procédé selon la revendication 16, dans lequel le polymère soluble dans l'eau est le poly(alcool vinylique) et le liant organique comprend en outre du glycérol.
